# EUROPEAN PATENT APPLICATION

(11) **EP 4 354 565 A1**
(43) Date of publication of application: **17.04.2024**
(21) Application number: 22853308.9
(22) Date of filing: 19.07.2022
(51) Int. Cl.: H01M 10/04, H01M 10/625, H01M 10/42, H01M 50/531, H01M 4/02

(54) **ELECTRODE ASSEMBLY, BATTERY, AND BATTERY PACK AND VEHICLE COMPRISING SAME**

(30) Priority: 05.08.2021 KR 20210103388; 15.10.2021 KR 20210137200; 28.12.2021 KR 20210190215
(71) Applicant: LG Energy Solution, Ltd., Seoul 07335 (KR)
(72) Inventor: LEE, Kwan-Hee, Daejeon 34122 (KR); KIM, Sue-Jin, Daejeon 34122 (KR); LEE, Yun-Ju, Daejeon 34122 (KR); RYU, Duk-Hyun, Daejeon 34122 (KR)
(74) Representative: Goddar, Heinz J.
(86) International application number: PCT/KR2022/010558
(87) International publication number: WO 2023/013929

(57) **Abstract**

Disclosed is an electrode assembly in which a first electrode and a second electrode having a sheet shape and a separation film interposed therebetween are wound based on an axis to define a core and an outer circumference. The first electrode and the second electrode respectively includes an uncoated portion not coated with an active material layer on a longer edge end; and a coated portion having an active material layer coated on a region excluding the uncoated portion. The first electrode includes an insulation layer that simultaneously covers at least a portion of the uncoated portion and at least a portion of the coated portion along a winding direction. The uncoated portion may be bent in a radial direction of the electrode assembly, and the bending point may be spaced apart from the axial end of the insulation layer. At least a portion of the uncoated portion may be used as an electrode tab by itself.

## Description

### TECHNICAL FIELD

The present disclosure relates to an electrode assembly, a battery, and a battery pack and a vehicle including the same.

The present application claims priority to Korean Patent Application No. 10-2021-0103388 filed on August 5, 2021 in the Republic of Korea, Korean Patent Application No. 10-2021-0137200 filed on October 15, 2021 in the Republic of Korea, and Korean Patent Application No. 10-2021-0190215 filed on December 28, 2021 in the Republic of Korea, the disclosures of which are incorporated herein by reference.

### BACKGROUND ART

In cylindrical batteries, for higher current collection efficiency, a battery may adopt a jelly roll type electrode assembly having a shape in which a positive electrode tab and a negative electrode tab each extend on an upper side and a lower side, respectively, in a height direction of the battery housing.

In such a structure described above, a movement of a positive electrode or a negative electrode, such as lateral motion, may occur. In this case, there is a possibility that an end of the positive electrode or the negative electrode is moved toward an end of a separation film. Accordingly, when the positive electrode or the negative electrode is positioned at up to the end of the separation film or protrudes further outward than the end of the separation film due to occurrence of the movement such as lateral motion of the positive electrode or the negative electrode, electrical contact between the positive electrode and the negative electrode occurs. Alternatively, when the separation film is damaged for some reasons, electrical contact between the positive electrode and the negative electrode may occur. Consequently, a short circuit may occur inside a battery. A short circuit occurring inside the battery may cause heat generation or explosion of the battery. Accordingly, it is necessary to provide an insulation member for effectively preventing electrical contact between the positive electrode and the negative electrode.

Therefore, it is needed to provide a battery having a low internal resistance and a low risk of short circuit, and a battery pack and a vehicle including the battery is required.

Conventionally, in order to prevent such electrical contact, a technique of insulation-coating the end portions of the positive electrode and the negative electrode has been applied. However, according to this technology, the insulation coating is destroyed or the separation film is deformed in the process of bending the positive electrode or the negative electrode, which curtails the effect of the insulation coating.

### DISCLOSURE

### Technical Problem

The present disclosure is designed to solve the problems of the related art, and therefore is directed to reducing the internal resistance of a cylindrical battery and effectively preventing internal short circuit at the same time.

The present disclosure is directed to providing an electrode assembly that may fully keep the effect of insulating coating even if the electrode is bent, and a battery including the same.

The present disclosure is directed to providing an electrode assembly that may also improve electrolyte impregnability through the insulating coating, and a battery including the same.

The technical problems to be solved in the present disclosure are not limited to the above, and other problems that are not mentioned could be clearly understood by one of ordinary skill in the art from the description of the present disclosure below.

### Technical Solution

In one aspect of the present disclosure, there is provided an electrode assembly comprising a first electrode; a second electrode having a sheet shape; and a separation film between the first electrode and the second electrode, the first electrode and the second electrode, and the separator film being wound about an axis in a winding direction to define a core and an outer circumference of the electrode assembly, wherein each of the first electrode and the second electrode includes: an uncoated portion not coated with an active material layer and formed on a longer edge end, the uncoated portion protruding beyond the separation film along an axial direction; and a coated portion having an active material layer coated on a region excluding the uncoated portion.

Preferably, the first electrode includes at least one insulation layer that covers at least a portion of the uncoated portion and at least a portion of the coated portion along the winding direction.

The uncoated portion is bent in a radial direction at a point spaced apart from the insulation layer in the axial direction.

The insulation layer is thinner than the active material layer, and the insulation layer and the separation film may be slightly spaced.

The insulation layer reinforces the strength of the area of the first electrode covered by the insulation layer. Therefore, when bending the uncoated portion, the area of the uncoated portion not covered by the insulation layer is bent.

When the uncoated portion is bent, even if the area covered by the insulation layer is slightly deformed, since the insulation layer and the separation film are slightly spaced apart, deformation of the separation film due to deformation of the insulation layer may be prevented. If the deformation of the separation film is prevented, the effect of preventing contact between the first electrode and the second electrode is maintained.

A predetermined gap exists between a bent area of the uncoated portion and the insulation layer in the axial direction.

The gap may be 0.2 mm or more, preferably 0.4 mm or more. If the gap is smaller than this, the insulation layer may be damaged or deformed when bending the uncoated portion.

The gap may be 4 mm or less, preferably 1.5 mm or less. When the gap is greater than this, the effect of supporting the bending of the uncoated portion of the insulation layer begins to decrease, while the effect of preventing damage or deformation of the insulation layer does not increase.

That is, the gap may be 0.2 mm to 4 mm, preferably 0.4 mm to 1.5 mm.

At least a portion of the uncoated portion may be used as an electrode tab by itself.

The uncoated portion of the first electrode has a first surface facing the core and a second surface facing the outer circumference.

Preferably, the insulation layer may be provided on the first surface and the second surface.

The uncoated portion may be bent toward the core so that the first surface faces the end surface of the electrode assembly.

An area where the insulation layer covers the first surface may extend farther toward a free end of the uncoated portion than an area where the insulation layer covers the second surface.

When the uncoated portion is bent toward the core, the tensile force along the axial direction acts on the second surface, and the compressive force along the axial direction acts on the first surface. Therefore, if the insulation layer of the first surface is further reinforced, buckling of the uncoated portion may be further prevented.

In addition, if the height of the insulation layer covering the second surface is lower than the height of the insulation layer of the first surface, by minimizing the phenomenon that the insulation layer is interposed between two adjacent uncoated portions when the bent portion of the adjacent uncoated portion facing the second surface overlaps onto the second surface, it is possible to further secure an electric connection path between the overlapping uncoated portions.

According to the present disclosure, the uncoated portion may be bent and overlapped into several layers in the axial direction, and an insulation layer may not be formed on a surface in which the uncoated portions adjacent in the axial direction are in contact with each other.

As such, according to the present disclosure, while reinforcing the strength of the uncoated portion by the insulation layer, it is possible to sufficiently secure an electric connection path between the overlapping uncoated portions.

One end of the insulation layer may have at least substantially a same height as one end of the separation film.

One end of the insulation layer may extend outward in the axial direction farther than one end of the separation film.

In other words, one end of the insulation layer in the axial direction may be located at substantially a same height as one end of the separation film in the axial direction or outside the one end.

More preferably, one end of the insulation layer in the axial direction may be located at substantially a same height as one end of the separation film in the axial direction.

In one aspect, the uncoated portion may protrude beyond the insulation layer.

Meanwhile, the coated portion may not protrude in an axial direction farther than the separation film.

Preferably, the first electrode may be a positive electrode.

In an embodiment, one end of the second electrode that faces the insulation layer with the separation film interposed between the second electrode and the insulation layer may not protrude beyond one end of the separation film.

Meanwhile, the coated portion may include a sliding portion of which the active material layer has a reduced thickness, compared with a center region of the coated portion.

Here, the sliding portion may be located at a boundary area of the coated portion and the uncoated portion.

The sliding portion may be included in one end of the first electrode and the other end of the second electrode, respectively.

The sliding portion of the coated portion of the first electrode and the sliding portion of the coated portion of the second electrode may be included in opposite directions to each other based on the axial direction.

The separation film may protrude beyond the other end of the first electrode and one end of the second electrode.

In an embodiment, the insulation layer may cover at least a portion of the sliding portion.

The insulation layer may cover the uncoated portion by 0.3 mm to 5 mm.

Preferably, the insulation layer may cover the uncoated portion by 1.5 mm to 3 mm.

The insulation layer may cover the coated portion by 0.1 mm to 3 mm. Preferably, the insulation layer may cover the coated portion by 0.2 mm to 0.5 mm.

In another embodiment, at least a partial area of the uncoated portion may be divided into a plurality of segments.

Preferably, at least a partial area of the uncoated portion may be divided into a plurality of segments by a plurality of cut grooves spaced apart in the winding direction.

The segments may be bent in the radial direction.

In the process of bending the uncoated portion, the bending moment may be concentrated at the lower end of each of the cut grooves, and accordingly, a bending line may be formed at a position corresponding to the lower end of each of the cut grooves.

The gap may exist between the lower end of each of the cut grooves and the insulation layer.

The cut groove may include a flat bottom portion, side portions of adjacent segments located on opposites sides of the bottom portion, and a round portion configured to connect the bottom portion and each of the side portions.

To improve electrolyte impregnability, an imaginary line along the axial end of the insulation layer may overlap with the round portion.

In order to improve electrolyte impregnation and minimize buckling during bending of the uncoated portion, the uncoated portion of the first electrode may have a first surface facing the core and a second surface facing the outer circumference, an area where the insulation layer covers the first surface may extends farther toward a free end of the uncoated portion of the first electrode than an area where the insulation layer covers the second surface, and the imaginary line along the axial end of the insulation layer formed on the second surface of the uncoated portion of the first electrode may overlap with the round portion.

The plurality of segments may be overlapped in several layers along the axial direction while being bent toward the core.

In an embodiment, the uncoated portion of the first electrode and the uncoated portion of the second electrode may protrude in opposite directions based on the axial direction.

Meanwhile, a length in the axial direction of the coated portion of the first electrode may be shorter than a length in the axial direction of the coated portion of the second electrode.

The coated portion of the first electrode may be located more inward in the axial direction than the coated portion of the second electrode.

The insulation layer may be an insulation coating layer or an insulation tape provided on a boundary area of the uncoated portion and the coated portion.

Preferably, the insulation layer may include a binder and an inorganic filler.

Preferably, the insulation layer may be porous.

In another aspect of the present disclosure, there is also provided a battery, comprising: the electrode assembly; a battery housing configured to accommodate the electrode assembly, the battery housing having an open end, the electrode assembly electrically connected to one of the first electrode and the second electrode; a sealing body configured to seal the open end of the battery housing; and a terminal electrically connected to another of the first electrode and the second electrode, the terminal having a surface exposed to the outside of the battery housing.

The battery may further comprise a first current collector plate electrically coupled to the uncoated portion of the first electrode.

A region of the uncoated portion of the first electrode not covered by the insulation layer is electrically coupled to the first current collector plate.

The uncoated portion of the first electrode is coupled to the first current collector plate by welding in the region of the uncoated portion not covered by the insulation layer.

In another aspect of the present disclosure, there is also provided a battery pack, comprising the plurality of batteries; and a pack housing configured to accommodate the plurality of batteries.

In another aspect of the present disclosure, there is also provided a vehicle, comprising the battery pack.

### Advantageous Effects

According to the present disclosure, the internal resistance of a battery may be remarkably reduced.

Moreover, according to the present disclosure, a short circuit within the battery may be effectively prevented by more securely preventing electrical contact between a positive electrode and a negative electrode of an electrode assembly.

In addition, according to the present disclosure, since the insulation layer supports the bending point of the uncoated portion, buckling occurring when the uncoated portion is bent may be minimized.

In addition, according to the present disclosure, when the uncoated portion includes a plurality of segments spaced apart by the cut groove, the axial end of the insulation layer overlaps with the round portion of the cut groove, thereby improving electrolyte impregnability.

The effects of the present disclosure are not limited to the above-described effects, and other effects not mentioned will be clearly understood by a person skilled in the art from the following description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a cylindrical battery according to an embodiment of the present disclosure.
FIG. 2 is a longitudinal sectional view of the cylindrical battery according to an embodiment of the present disclosure.
FIG. 3 is a perspective view showing an electrode assembly included in the cylindrical battery according to an embodiment of the present disclosure.
FIG. 4 is a partial longitudinal sectional view showing the arrangement structure of an electrode and a separation film included in the electrode assembly according to an embodiment of the present disclosure.
FIG. 5 is a partial longitudinal sectional view showing the arrangement structure of an electrode and a separation film included in an electrode assembly according to another embodiment of the present disclosure.
FIG. 6 is a partial longitudinal sectional view showing the arrangement structure of the electrode and the separation film included in an electrode assembly when the uncoated portion is bent according to an embodiment of the present disclosure.
FIG. 7a is a partial plan view of an electrode showing characteristics of a gap between an insulation layer and a cut groove when the uncoated portion of the electrode includes a plurality of segments according to an embodiment of the present disclosure.
FIG. 7b is a partial plan view of an electrode showing characteristics when an end of the insulation layer overlaps with the round portion of the cut groove when the uncoated portion of the electrode includes a plurality of segments according to another embodiment of the present disclosure.
FIG. 8 is a perspective view showing an electrode assembly in a state in which segments are bent according to an embodiment of the present disclosure.
FIG. 9 is a partial longitudinal sectional view showing the arrangement structure of the electrode and the separation film included in an electrode assembly according to the prior art.
FIG. 10 is a graph showing power distribution in several short-circuit cases in the battery.
FIG. 11 is a diagram showing a battery pack including the cylindrical battery according to an embodiment of the present disclosure.
FIG. 12 is a diagram showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In describing the embodiment, a direction corresponding to the winding axis of an electrode assembly 10 may be referred to as axial direction Z. The axial direction Z may be a direction corresponding to a width direction of sheet-shaped electrodes and separation films.

In addition, the longitudinal direction X of the sheet-shaped electrodes and the separation films may correspond to a circumferential direction X surrounding the wound electrode assembly 10.

In addition, the normal direction Y of the surfaces of the sheet-shaped electrodes and the separation films may correspond to a radial direction Y of the wound electrode assembly 10.

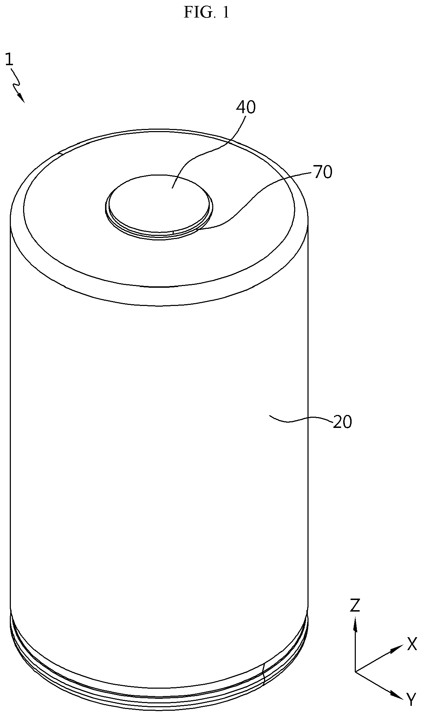

Referring to FIGS. 1 through 3, a battery 1 according to an embodiment of the present disclosure includes an electrode assembly 10, a battery housing 20, a sealing body 30, and a terminal 40.

The battery 1 may further include, in addition to the above-described elements, a first current collector plate 50 and/or an insulator 60 and/or an insulation gasket 70 and/or a second current collector plate 80 and/or a sealing gasket 90.

Referring to FIGS. 1 through 3, the electrode assembly 10 includes a first electrode 11 having a first polarity, a second electrode 12 having a second polarity, a separation film 13 interposed between the first electrode 11 and the second electrode 12, and an insulation layer 14 covering at least a portion of the first electrode 11.

The first electrode 11 is a positive electrode or a negative electrode, and the second electrode 12 corresponds to an electrode having an opposite polarity to that of the first electrode 11. In the embodiment, the first electrode 11 is a positive electrode, and the second electrode 12 is a negative electrode, as an example. Each of the first electrode 11 and the second electrode 12 may have a sheet shape. The electrode assembly 10 may have, for example, a jelly-roll shape. In other words, the electrode assembly 10 may be manufactured by winding, with respect to a winding center C, a stack formed by sequentially stacking the first electrode 11, the separation film 13, the second electrode 12, and the separation film 13 at least once. Alternatively, an outermost winding turn portion of the separation film 13 may be provided on an outer circumferential surface of the electrode assembly 10 in order to achieve insulation from the battery housing 20.

The first electrode 11 and the second electrode 12 may include uncoated portions 11a and 12a each not coated with an active material layer, on respective longer edge ends of the first electrode 11 and the second electrode 12, respectively. The first electrode 11 and the second electrode 12 may include coated portions 11b and 12b each coated with an active material layer, on regions of the first electrode 11 and the second electrode 12 excluding the uncoated portions 11a and 12a, respectively.

In detail, the first electrode 11 includes a first electrode current collector and a first electrode active material layer coated on one surface or both surfaces of the first electrode current collector. A region coated with the first electrode active material layer on the first electrode current collector is referred to the coated portion 11b included in the first electrode 11. An uncoated portion 11a not coated with the first electrode active material layer may be present at one end of the first electrode current collector in an axial direction. A least a portion of the uncoated portion 11a is used as an electrode tab by itself. In other words, at least a portion of the winding turns of the uncoated portion 11a functions as an electrode tab of the first electrode 11. The uncoated portion 11a included in the first electrode 11 is provided in an upper portion of the electrode assembly 10 accommodated in the battery housing 20, in an axial direction.

The second electrode 12 includes a second electrode current collector and a second electrode active material layer coated on one surface or both surfaces of the second electrode current collector. A region coated with the second electrode active material layer on the second electrode current collector is referred to the coated portion 12b included in the second electrode 12. An uncoated portion 12a not coated with the second electrode active material may be present at the other end of the second electrode current collector in an axial direction. A least a portion of the uncoated portion 12a is used as an electrode tab by itself. In other words, at least a portion of the winding turns of the uncoated portion 12a functions as an electrode tab of the second electrode 12. The uncoated portion 12a included in the second electrode 12 is provided in a lower portion of the electrode assembly 10 accommodated in the battery housing 20, in the axial direction.

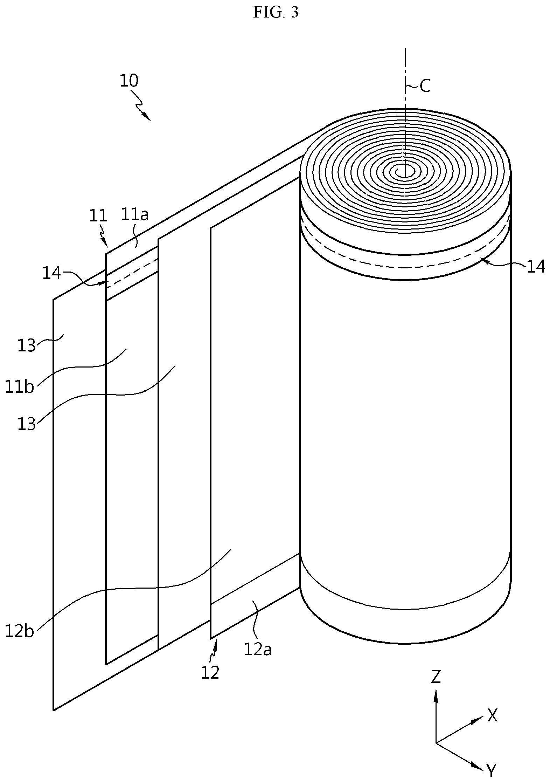

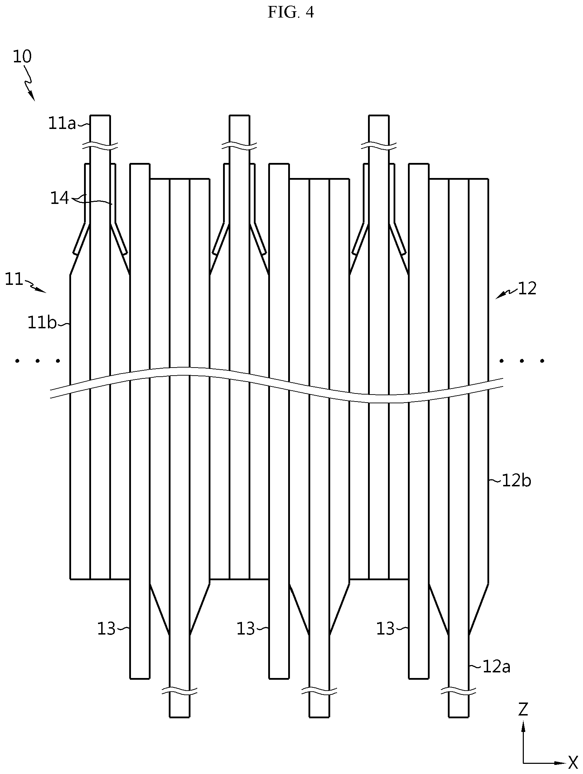

The uncoated portion 11a included in the first electrode 11 and the uncoated portion 12a included in the second electrode 12 may protrude in opposite directions to each other. For example, referring to FIGS. 3 and 4, the uncoated portion 11a included in the first electrode 11 protrudes upwards in the axial direction of the electrode assembly 10, and the uncoated portion 12a included in the second electrode 12 protrudes downwards in the axial direction. Accordingly, the uncoated portion 11a included in the first electrode 11 and the uncoated portion 12a included in the second electrode 12 may extend and protrude toward the outside of the separation film 13 in opposite direction to each other in an axial direction of the electrode assembly 10.

For convenience of description, in FIG. 4, the thicknesses of the separation film 13, the first electrode 11 and the second electrode 12 are exaggerated, and the length of the uncoated portion 11a is shown to be reduced compared to the actual length.

Meanwhile, the coated portions 11b and 12b may respectively include sliding portions in which the active material layers have reduced thicknesses, compared with center regions of the coated portions 11b and 12b. For example, referring to FIG. 4, each of the first electrode 11 and the second electrode 12 may include, on one end or the other end thereof, the sliding portion in which the active material layer has a reduced thickness.

The sliding phenomenon refers to a phenomenon in which, due to spread of a slurry containing an electrode active material, a less electrode active material is coated on a boundary of a slurry-coating region than a region except the boundary of the slurry-coating region, and thus the slurry on the coating boundary region has an approximately inclined shape. Here, when an electrode is entirely dried, the volume of the slurry is reduced as a solvent contained in the slurry is evaporated, and the sliding phenomenon may become more severe near a boundary between a region coated with the electrode active material and a region not coated with the electrode active material.

The sliding portion may be formed at boundary regions between the coated portions 11b and 12b and the uncoated portions 11a and 12a. For example, the sliding portion may be included on one end of the first electrode 11 and the other end of the second electrode 12, respectively. In other words, the sliding portion of the coated portion 11b included in the first electrode 11 and the sliding portion of the coated portion 12b included in the second electrode 12 may be included in opposite directions to each other. For example, referring to FIG. 4, the sliding portion of the first electrode 11 may be formed in an upper portion in an axial direction, and the sliding portion of the second electrode 12 may be formed in an opposite direction to the sliding portion of the first electrode 11, namely, in a lower portion in the axial direction.

Meanwhile, a length of the coated portion 11b included in the first electrode 11 in the axial direction may be less than that of the coated portion 12b included in the second electrode 12 in the axial direction. The coated portion 11b included in the first electrode 11 may be positioned more inward in the axial direction than the coated portion 12b included in the second electrode 12. For example, referring to FIG. 4, the length of the coated portion 12b included in the second electrode 12 in the axial direction may be greater than the length of the coated portion 11b included in the first electrode 11 in the axial direction. Accordingly, the upper end of the coated portion 11b of the first electrode 11 is lower than the upper end of the coated portion 12b of the second electrode 12, and the lower end of the coated portion 11b of the first electrode 11 is higher than the lower end of the coated portion 12b of the second electrode 12. Further, referring to FIG. 4, the length of the coated portion 11b included in the first electrode 11 in the axial direction may also be less than a length of a portion other than the sliding portion of the coated portion 12b included in the second electrode 12 in the axial direction. This structure is provided to prevent lithium metal from being precipitated due to a reduction of an NP Ratio of a positive electrode/negative electrode to 100% or less.

Meanwhile, the coated portions 11b and 12b may not protrude in the axial direction farther than the separation film 13. If the coated portions 11b and 12b protrude in the axial direction farther than the separation film 13, the possibility of contact between the first electrode 11 and the second electrode 12 may increase. Accordingly, an internal short circuit may occur in a contact area between the first electrode 11 and the second electrode 12, thereby increasing the risk of ignition. Therefore, it is important that the coated portions 11b and 12b do not protrude in the axial direction farther than the separation film 13. In other words, it is preferable that the coated portions 11b and 12b are positioned inward from both ends of the separation film 13 based on the axial direction.

Meanwhile, in the present disclosure, a positive electrode active material coated on a positive electrode plate and a negative electrode active material coated on a negative electrode plate may be used without limitation as long as they are active materials known in the art.

In an example, the positive electrode active material may include an alkali metal compound expressed by a general formula of A[AₓM_{y}]O_{2+z} (where A includes at least one element selected from Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤ 2, - 0.1 ≤ z ≤ 2; and the stoichiometric coefficients x, y and z are selected such that the compound maintains electrical neutrality).

In another example, the positive electrode active material may be an alkali metal compound xLiM¹O₂₋ (1-x)Li₂M²O₃ disclosed in US 6,677,082, US 6,680,143, and the like, wherein M¹ includes at least one element having an average oxidation state of 3; M² includes at least one element having an average oxidation state of 4; 0≤x≤1).

In another example, the positive electrode active material may be lithium metal phosphate expressed by a general formula of LiₐM¹ₓFe₁₋ₓM²_{y}P_{1-y}M³_{z}O_{4-z} (where M¹ includes at least one element selected from Ti, Si, Mn, Co, Fe, V, Cr, Mo, Ni, Nd, Al, Mg, and Al; M² includes at least one element selected from Ti, Si, Mn, Co, Fe, V, Cr, Mo, Ni, Nd, Al, Mg, Al, As, Sb, Si, Ge, V, and S; M³ includes a halogen group element selectively including F; 0 < a ≤2, 0 ≤ x ≤ 1, 0 ≤ y < 1, 0 ≤ z < 1; the stoichiometric coefficients a, x, y and z are selected such that the compound maintains electrical neutrality), or Li₃M₂ (PO₄)₃ [wherein M includes at least one element selected from Ti, Si, Mn, Fe, Co, V, Cr, Mo, Ni, Al, Mg, and Al].

Preferably, the positive electrode active material may include primary particles and/or secondary particles in which primary particles are aggregated.

In an example, as the negative electrode active material, a carbon material, a lithium metal or a lithium metal compound, silicon or a silicon compound, tin or a tin compound may be used. A metal oxide such as TiO₂ or SnO₂ having an electric potential of less than 2 V may also be used as the negative electrode active material. As the carbon material, a low-crystalline carbon, a high-crystalline carbon, or the like may be used.

As the separation film, a porous polymer film, for example, a porous polymer film manufactured of a polyolefin-based polymer such as an ethylene homopolymer, a propylene homopolymer, an ethylene/butene copolymer, an ethylene/hexene copolymer, or an ethylene/methacrylate copolymer, may be used alone or by stacking these. As another example, as the separation film, a typical porous nonwoven fabric, for example, a nonwoven fabric formed of glass fiber having a high melting point or polyethylene terephthalate fiber, may be used.

A coating layer of inorganic particles may be included on at least one surface of the separation film. The separation film itself may be formed of a coating layer of inorganic particles. Particles constituting the coating layer may have a structure combined with a binder such that an interstitial volume exists between adjacent particles.

The inorganic particles may be formed of an inorganic material having a permittivity of 5 or more As a non-limiting example, the inorganic particles may include at least one material selected from the group consisting of Pb(Zr,Ti)O₃ (PZT), Pb₁₋ₓLaₓZr_{1-y}Ti_{y}O₃ (PLZT), PB (Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO, and Y₂O₃.

An electrolyte may be a salt having a structure such as A⁺B⁻. Here, A⁺ includes alkali metal cations such as Li+, Na+, and K+, or an ion corresponding to a combination thereof. B⁻⁻ includes one or more anions selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻; (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂ (CF₃)₂CO⁻, (CF₃SO₂)₂CH⁻, (SF₅)₃C⁻, (CF₃SO₂)₃C⁻, CF₃ (CF₂)₇SO₃⁻, CF₃CO₂⁻, CH₃CO₂⁻, SCN⁻, and (CF₃CF₂SO₂)₂N⁻.

The electrolyte may also be used after being dissolved in an organic solvent. As an organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (γ-butyrolactone), or a mixture thereof may be used.

To minimize the possibility of contact between the first electrode 11 and the second electrode 12, the first electrode 11 according to the present disclosure may include at least one insulation layer 14 that simultaneously covers at least a portion of the uncoated portion 11a and at least a portion of the coated portion 11b. The insulation layer 14 may cover at least a boundary area between the uncoated portion 11a and the coated portion 11b, and cover areas of the uncoated portion 11a and the coated portion 11b adjacent to the boundary area.

The insulation layer 14 may effectively prevent electrical contact between the first electrode 11 and the second electrode 12. In more detail, the insulation layer 14 may effectively prevent electrical contact between the uncoated portion 11a included in the first electrode 11 and the coated portion 12b included in the second electrode 12.

The insulation layer 14 may be formed on at least one surface of the first electrode 11. For example, the insulation layer 14 may be formed on both surfaces of the first electrode 11. When viewed in the radial direction, the separation film 13 is located on both sides of the first electrode 11, and the second electrode 12 faces the first electrode 11 with the separation film interposed therebetween. Accordingly, to prevent electrical contact between the first electrode 11 and the second electrodes 12 facing each other with the separation film interposed therebetween, the insulation layer 14 is preferably provided on both surfaces of the first electrode 11.

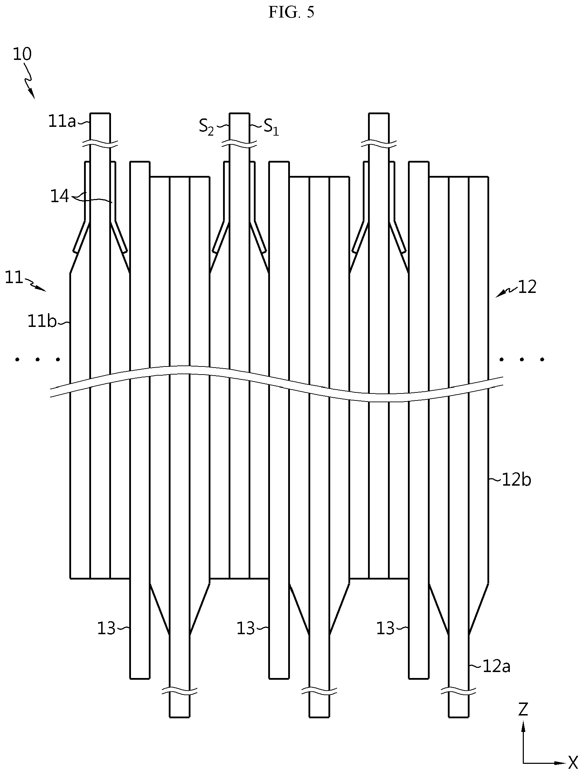

The insulation layer 14 may be formed on an entire region that is likely to face the coated portion 12b included in the second electrode 12, among the region of the first electrode 11. For example, one end of the insulation layer 14 in the axial direction may be located at the same height as one end of the separation film 13 in the axial direction or may be located outside the one end. In more detail, referring to FIG. 4 as an example, one end of the insulation layer 14 in the axial direction may be located at the same height as one end of the separation film 13 in the axial direction. Alternatively, as shown in FIG. 5, one end of the insulation layer 14 in the axial direction may be located higher than one end of the separation film 13 in the axial direction.

Because the separation film 13 may protrude between the first electrode 11 and the second electrode 12 in the axial direction, electrical contact between the first electrode 11 and the second electrode 12 may be somewhat prevented. However, because a movement of the first electrode 11 or the second electrode 12, such as lateral motion, is likely to occur within the battery 1, the possibility that the second electrode 12 is located near an end of the separation film 13 may not be excluded. Accordingly, when the second electrode 12 is located at up to the end of the separation film 13 or the second electrode 12 protrudes farther outwards than the end of the separation film 13 due to occurrence of the movement such as lateral motion, electrical contact between the first electrode 11 and the second electrode 12 may not be avoided. Further,, when the separation film 13 is damaged for some reasons, electrical contact between the first electrode 11 and the second electrode 12 may not be avoided. Thus, even in this case, to prevent electrical contact between the first electrode 11 and the second electrode 12, it is preferable that the insulation layer 14 included in the first electrode 11 at least extends to the same height as the one end of the separation film 13 or extends outwards from the one end.

However, when the insulation layer 14 covers the entirety of the uncoated portion 11a included in the first electrode 11, the uncoated portion 11a is not able to function as an electrode tab, and thus the insulation layer 14 needs to cover only a portion of the uncoated portion 11a included in the first electrode 11. In other words, the uncoated portion 11a may have a shape protruding farther outwards from the insulation layer 14.

The insulation layer 14 may be an insulating coating layer or insulation tape included on a boundary area between the uncoated portion 11a and the coated portion 11b. The shape of the insulation layer 14 is not limited thereto, and any shape enabling the insulation layer 14 to be attached to the first electrode 11 while securing insulation performance may be employed in the present disclosure. Meanwhile, the insulation layer 14 may include, for example, a binder such as an organic SBR and an inorganic filler such as SiO₂ and Al₂O₃ to ensure insulation performance. Of course, the binder and the inorganic filler may be other materials known in the art.

The insulation layer 14 may cover at least a portion of the uncoated portion 11a and at least a portion of the coated portion 11b at the same time. For example, the insulation layer 14 may be formed on the boundary area between the uncoated portion 11a and the coated portion 11b. For example, the insulation layer 14 may cover at least a portion of the sliding portion.

For example, the insulation layer 14 may extend to a point of about 0.3 mm to about 5 mm away from a boundary between the uncoated portion 11a and the coated portion 11b, on the entire region of the uncoated portion 11a included in the first electrode 11. More preferably, the insulation layer 14 may extend to a point of about 1.5 mm to about 3 mm away from the boundary between the uncoated portion 11a and the coated portion 11b, on the entire region of the uncoated portion 11a included in the first electrode 11.

When there are no insulation layers 14, an internal short circuit is likely to occur due to contact between the first electrode 11 and the second electrode 12, and thus it is preferable that the insulation layer 14 extends up to a location where electrical contact between the first electrode 11 and the second electrode 12 does not occur.

Meanwhile, the insulation layer 14 may extend to a point of about 0.1 mm to about 3 mm away from the boundary between the uncoated portion 11a and the coated portion 11b, on the entire region of the coated portion 11b included in the first electrode 11. More preferably, the insulation layer 14 may extend to a point of about 0.2 mm to about 0.5 mm away from the boundary between the uncoated portion 11a and the coated portion 1 1b, on the entire region of the coated portion 11b included in the first electrode 11.

When the insulation layer 14 covers a portion of the coated portion 11b included in the first electrode 11, a capacity loss of the battery 1 occurs, and thus there is a need to minimize the coated portion covering length of the insulation layer 14. However, because the coated portion 11b included in the first electrode 11 is likely to contact the second electrode 12, the insulation layer 14 desirably covers at least a portion of the coated portion 1 1b included in the first electrode 11 in order to prevent the contact.

Referring to FIG. 4, the separation film 13 may have a shape protruding outwards from the other end of the first electrode 11 and one end of the second electrode 12. Here, one end refers to an upper end in the axial direction, and the other end refers to a lower end in the axial direction. Thus, the separation film 13 may have a shape protruding outwards farther from a lower end of the first electrode 11 and protruding outwards farther from an upper end of the second electrode 12. The separation film 13 does not protrude from the upper end of the first electrode 11, in order for the upper end of the first electrode 11, namely, the uncoated portion 11a by itself, to function as an electrode tab for the first electrode 11. Similarly, the separation film 13 does not protrude from the lower end of the second electrode 12, in order for the lower end of the second electrode 12, namely, the uncoated portion 12a by itself, to function as an electrode tab for the second electrode 12.

Meanwhile, one end of the second electrode 12 facing the insulation layer 14 with the separation film 13 interposed therebetween may not protrude outwards farther than one end of the separation film 13. For example, referring to FIG. 4, the insulation layer 14 is included on one end of the first electrode 11, and one end of the second electrode 12 facing the insulation layer 14 is located inside the separation film 13. Thus, even when one end of the first electrode 11 protrudes outwards from the separation film 13, because one end of the second electrode 12 is located inside the separation film 13, the possibility of contact between the first electrode 11 and the second electrode 12 is significantly reduced.

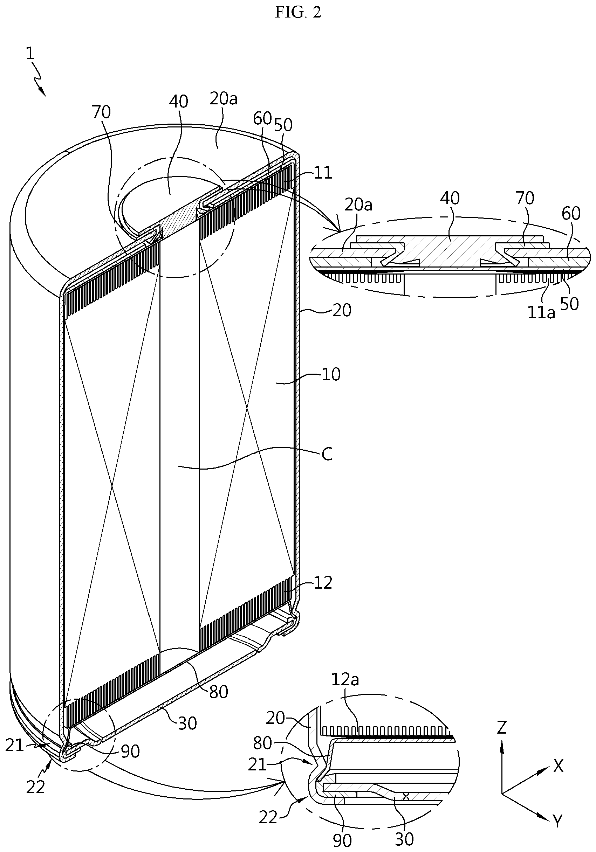

Referring to FIGS. 1 and 2, the battery housing 20 is a substantially cylindrical container having an open portion at a lower end thereof, and is formed of, for example, a conductive material such as metal. The material of the battery housing 20 may be, for example, aluminum. A bottom of the battery housing 20 including the open portion is referred to as an open end. A lateral surface (outer circumferential surface) and an upper surface of the battery housing 20 may be integrally formed. The upper surface (surface perpendicular to the Z axis, surface parallel to an X-Y plane) of the battery housing 20 is approximately flat. The upper surface of the battery housing 20 opposite to the open end is referred to as a closed end. The battery housing 20 accommodates the electrode assembly 10 through the open portion formed in the lower portion thereof, and also accommodates an electrolyte.

The battery housing 20 is electrically connected to the electrode assembly 10. The battery housing 20 may be electrically connected to one of the first electrode 11 and the second electrode 12. For example, the battery housing 20 may be electrically connected to the second electrode 12 of the electrode assembly 10. In this case, the battery housing 20 may have the same polarity as the second electrode 12.

Referring to FIG. 2, the battery housing 20 may include a beading portion 21 and a crimping portion 22 formed at the lower end thereof. The beading portion 21 is located below the electrode assembly 10. The beading portion 21 is formed by press-fitting a circumference of the outer circumferential surface of the battery housing 20. The beading portion 21 prevents the electrode assembly 10, which may have a size approximately corresponding to an internal diameter of the battery housing 20, from escaping through the open portion formed at the lower end of the battery housing 20, and may function as a support portion on which the sealing body 30 is seated.

The crimping portion 22 is formed under the beading portion 21. The crimping portion 22 has an extended and bent shape to surround an outer circumferential surface of the sealing body 30 arranged below the beading portion 21 and a portion of a lower surface of the sealing body 30.

However, the present disclosure does not exclude a case in which the battery housing 20 does not include the beading portion 21 and/or the crimping portion 22 described above. In other words, in the present disclosure, when the battery housing 20 does not include the beading portion 21 and/or the crimping portion 22, the electrode assembly 10 may be fixed and/or the battery housing 20 may be sealed, for example, by further applying a component part capable of functioning as a stopper with respect to the electrode assembly 10. When the battery 1 of the present disclosure includes the sealing body 30, the electrode assembly 10 may be fixed and/or the battery housing 20 may be sealed, for example, by further applying a structure on which the sealing body 30 may be seated and/or by performing welding between the battery housing 20 and the sealing body 30 such that the sealing body 30 may seal the open end of the battery housing 20.

Referring to FIG. 2, the sealing body 30 may be formed of, for example, a metal material, to ensure rigidity. The sealing body 30 may cover the open end formed at the lower end of the battery housing 20. In other words, the sealing body 30 forms a lower surface of the cylindrical battery 1. In the battery 1 of the present disclosure, the sealing body 30 may have no polarity even when the sealing body 30 includes a metal material having conductivity. When the sealing body 30 has no polarity, it may mean that the sealing body 30 is electrically insulated from the battery housing 20 and the terminal 40. Accordingly, the sealing body 30 does not function as a positive electrode terminal or a negative electrode terminal. Thus, the sealing body 30 does not need to be electrically connected to the electrode assembly 10 and the battery housing 20, and the material thereof does not necessarily have to be a conductive metal.

When the battery housing 20 according to the present disclosure includes the beading portion 21, the sealing body 30 may be seated on the beading portion 21 formed in the battery housing 20. When the battery housing 20 according to the present disclosure includes the crimping portion 22, the sealing body 30 is fixed by the crimping portion 22. The sealing gasket 90 may be arranged between the sealing body 30 and the crimping portion 22 of the battery housing 20 to ensure airtightness of the battery housing 20. As described above, the battery housing 20 according to the present disclosure may not include the beading portion 21 and/or the crimping portion 22. In this case, to ensure airtightness of the battery housing 20, the sealing gasket 90 may be arranged between the sealing body 30 and a structure for fixing the sealing body 30 provided at the open portion of the battery housing 20.

Referring to FIGS. 1 and 2, the terminal 40 may be electrically connected to one of the first electrode 11 and the second electrode 12. In other words, the terminal 40 may have an opposite polarity to that of the battery housing 20. For example, the terminal 40 may be electrically connected to the first electrode 11 of the electrode assembly 10. A surface of the terminal 40 may be exposed to the outside.

The terminal 40 may be formed of a metal material having conductivity. The terminal 40 may pass through, for example, an approximate center portion of the closed end of the battery housing 20. A portion of the terminal 40 may be exposed to the upper side of the battery housing 20, and the remaining portion thereof may be located within the battery housing 20. The terminal 40 may be fixed onto an inner surface of the closed end of the battery housing 20 by, for example, riveting. The terminal 40 may pass through the insulator 60 and be coupled to the first current collector plate 50 or the uncoated portion 11a included in the first electrode 11. In this case, the terminal 40 may have a first polarity. Accordingly, the terminal 40 may function as a first electrode terminal of the battery 1 according to an embodiment of the present disclosure. When the terminal 40 has the first polarity as described above, the terminal 40 is electrically insulated from the battery housing 20 having a second polarity. The electrical insulation between the terminal 40 and the battery housing 20 may be implemented in various ways. For example, insulation may be implemented by arranging the insulation gasket 70, which will be described later, between the terminal 40 and the battery housing 20. Alternatively, insulation may be implemented by forming an insulating coating layer on a portion of the terminal 40. Alternatively, a method of structurally and firmly fixing the terminal 40 so as to prevent contact between the terminal 40 and the battery housing 20 may be applied. Alternatively, a plurality of methods among the above-described methods may be applied together.

Referring to FIG. 2, the first current collector plate 50 may be coupled to an upper portion of the electrode assembly 10. For example, the first current collector plate 50 above the electrode assembly 10 may be coupled to the uncoated portion 11a included in the first electrode 11. The first current collector plate 50 may be formed of a metal material having conductivity. Although not shown in the drawings, the first current collector plate 50 may include a plurality of protrusions radially formed on a lower surface thereof. When the plurality of protrusions are included, the first current collector plate 50 is pressed such that the plurality of protrusions may be press-fitted onto the uncoated portion 11a included in the first electrode 11.

According to another embodiment of the present disclosure, the battery 1 may not include the first current collector plate 50. In this case, the uncoated portion 11a included in the first electrode 11 may be electrically connected directly to the terminal 40.

Referring to FIG. 2, the first current collector plate 50 may be coupled to an end of the uncoated portion 11a included in the second electrode 11. The coupling between the uncoated portion 11a included in the first electrode 11 and the first current collector plate 50 may be achieved by, for example, laser welding. The laser welding may be performed by partially melting a base member of the first current collector plate 50 or optionally may be performed with a solder for welding interposed between the first current collector plate 50 and the uncoated portion 11a. In this case, it is preferable that the solder has a lower melting point than the first current collector plate 50 and the uncoated portion 11a. Resistance welding, ultrasonic welding, spot welding etc. may be used as an alternative to the laser welding, but a welding method is not limited thereto.

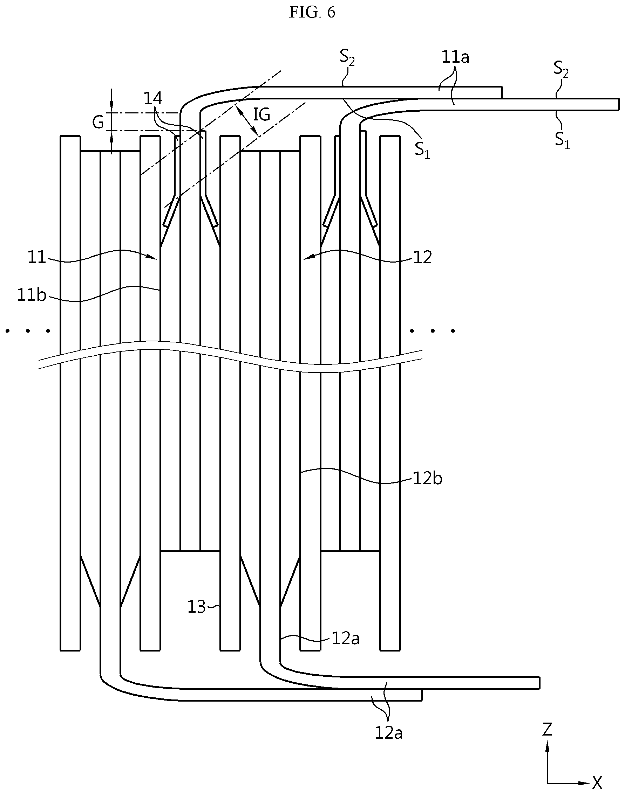

Referring to FIGS. 5 and 6, the uncoated portion 11a may be bent in a first direction (right direction in the drawing). A location where the uncoated portion 11a is bent may be spaced apart from the insulation layer 14 by a predetermined distance in an axial direction. That is, a predetermined gap G may be provided between the bending position of the uncoated portion 11a and the front end of the insulation layer 14.

The insulation layer 14 covering the first surface (Si) and the second surface (S₂) of the uncoated portion 11a reinforces the stiffness of the base end (near the boundary between the coated portion and the uncoated portion) of the uncoated portion 11a. As shown in FIGS. 5 and 6, the front end of the uncoated portion 11a has a structure like a cantilever. Therefore, when the front end of the uncoated portion 11a is pressed toward the core (center) in order to bend the uncoated portion 11a, a bending moment acts on the base end of the uncoated portion 11a. At this time, the insulation layer 14 reinforces the base end of the uncoated portion 11a, and the uncoated portion 11a is bent at a position higher than the front end of the insulation layer 14.

According to the present disclosure, the bent area of the uncoated portion 11a is formed at a position away from the front end of the insulation layer 14 by the predetermined gap G. If an excessively large bending moment is applied to the insulation layer 14 when the uncoated portion 11a is bent, the insulation layer 14 itself may be deformed or damaged. This increases the possibility of contact between the first electrode 11 and the second electrode 12 due to the absence of the insulation layer 14 in the position where it should exist.

Accordingly, in an embodiment of the present disclosure, when the uncoated portion 11a is bent in the radial direction, the bent area is spaced apart from the insulation layer 14 by the predetermined gap G.

Referring to FIGS. 5 and 6, the thickness of the insulation layer 14 is thinner than the thickness of the active material layer 11b. Accordingly, a slight gap occurs between the insulation layer 14 and the separation film 13. Accordingly, when bending the uncoated portion 11a, even if a portion of the insulation layer 14 is deformed, the deformation of the insulation layer 14 does not directly affect the separation film 13. Accordingly, the separation film 13 may maintain an extended shape in the axial direction as designed, thereby preventing contact between the first electrode 11 and the second electrode 12.

The insulation layer 14 is provided on both the first surface (Si) and the second surface (S₂) of the first electrode 11, and the uncoated portion 11a is bent toward the core to which the first surface (Si) faces. Accordingly, the first surface (Si) of the first electrode 11 receives a compressive force, and the second surface (S₂) receives a tensile force. Buckling phenomenon is more likely to occur when a compressive force is applied to a biased position from the axial direction of the cantilever. Therefore, in one embodiment of the present disclosure, as shown in FIG. 6, the insulation layer 14 coated on the first surface (Si) of the first electrode 11 covers the uncoated portion 11a longer in the axial direction than the insulation layer 14 of the second surface (S₂), thereby effectively preventing buckling of the uncoated portion 11a.

Also, when the uncoated portion 11a is bent toward the core, the second surface (S₂) of the uncoated portion 11a comes into contact with the first surface (Si) of another uncoated portion 11a disposed distally. Therefore, the height of the front end of the insulation layer 14 coated on the second surface (S₂) of the uncoated portion 11a is positioned lower than that of the first surface (S₁), thereby securing the contact area to the maximum when adjacent uncoated portions 11a overlap with each other.

Meanwhile, when bending the uncoated portion 11a, the uncoated portion 11a may be configured as a plurality of segments to precisely regulate the bending position and prevent a phenomenon that the uncoated portion 11a is not neatly bent but crumpled.

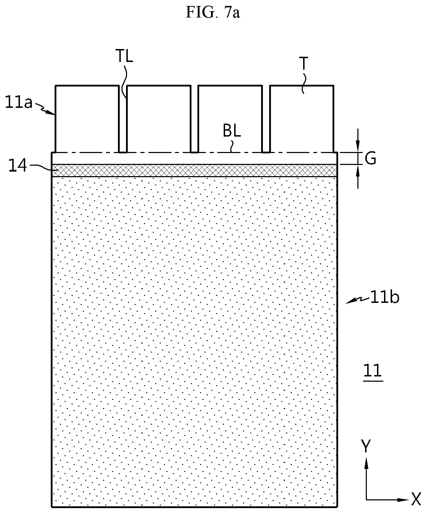

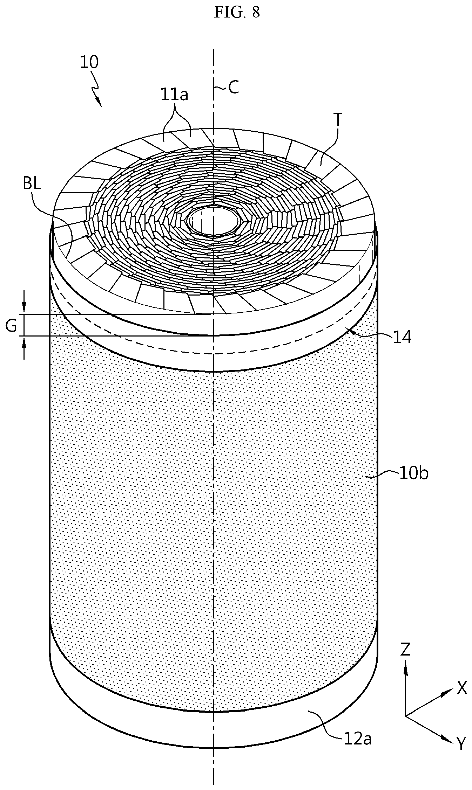

Referring to FIGS. 7a and 8, a cut groove TL may be formed at a front end of the uncoated portion 11a by notching or trimming at intervals along the circumferential direction X. Then, the uncoated portion 11a may have a shape in which a plurality of segments T are provided along the longitudinal direction of the first electrode 11. In case the uncoated portion 11a is only cut at regular intervals, it is obvious that the cutting line may also be regarded as a kind of cut groove TL.

The segment T may have various shapes such as an isosceles trapezoid, a semi-ellipse, a semi-circle, a rectangle, a square, an isosceles triangle, an equilateral triangle, etc., but has a substantially rectangular shape in this embodiment as an example.

In a state where the segment T is formed in this way, when the front end of the uncoated portion 11a is pressed in a radial direction to bend the uncoated portion 11a, the uncoated portion 11a is bent along the bending line BL connecting the lower ends of the cut grooves TL. That is, when the cut groove TL is formed to bend the uncoated portion 11a, bending is induced at the lower end of the segment T. Accordingly, the position of the bending line BL of the uncoated portion 11a may be accurately controlled.

In addition, when the segments T are formed, when the segments T are bent, the segments T exhibit an effect of being individually bent, so the possibility of problem that the uncoated portion 11a is crumpled and folded may be significantly reduced.

According to the embodiment, the aforementioned gap G may be a gap between the bending line BL, namely the lower end of the cut groove TL, and the front end of the insulation layer 14.

The gap G may be 0.2 mm to 4 mm. If the gap is smaller than 0.2 mm, the insulation layer 14 may be damaged or deformed during the bending process of the uncoated portion 11a. In addition, when the gap is greater than 4 mm, the effect of preventing damage to the insulation layer 14 does not increase anymore and the effect of supporting the bending of the uncoated portion by the insulation layer 14 begins to decrease.

The gap G may be more preferably 0.4 mm to 1.5 mm.

In another embodiment of the present disclosure, the position of the end of the insulation layer 14 may be adjusted based on the position of the lower end of the cut groove TL in order to improve the impregnation of electrolyte.

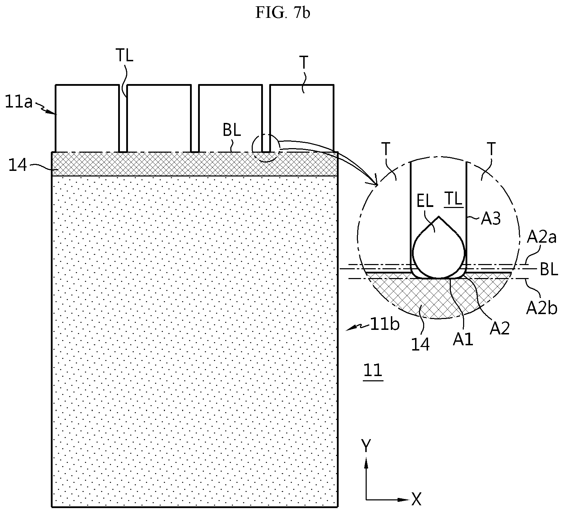

FIG. 7b is a partial plan view showing the deformed structure of the first electrode 11 in which the end of the insulation layer 14 extends to the lower end of the cut groove TL in consideration of the impregnability of electrolyte. The structure shown in the drawing may also be applied to the second electrode 11.

Referring to FIG 7b, the cut groove TL corresponds to a space created when the uncoated portion 11a of the first electrode 11 is removed. Preferably, the cut groove TL includes a flat bottom portion A1, a side portion A3 of the segment T located on both sides of the cut groove TL, and a round portion A2 smoothly connecting the bottom portion A1 and the side portion A3. The bottom portion A1 may be substantially parallel to the winding direction of the first electrode 11.

In the partially enlarged view of FIG. 7b, the symbols A2a and A2b represent a top position and a bottom position of the round portion A2, respectively, and BL represents a bending line.

The radius of curvature of the round portion A2 may be greater than 0 mm and 0.5 mm or less, preferably greater than 0 mm and 0.1 mm or less, more preferably 0.01 mm to 0.05 mm. When the radius of curvature of the round portion A2 satisfies the above numerical range, it is possible to prevent cracks from occurring at the lower portion of the cut groove TL while the first electrode 11 is running in a winding process or the like. In particular, when the uncoated portion 11a is made of aluminum, even when the first electrode 11 travels at a speed of 100 mm/sec or more under a tension of 300 gf or more in the winding process or the like, cracks may be prevented from occurring at the lower portion of the cut groove TL.

The round portion A2 may also effectively prevent the insulation layer 14 and/or the coated portion 11b from being damaged by the bending stress by relieving the stress generated near the bending line BL when the segments T located on both sides of the cut groove TL are bent.

As shown in FIG. 7b, an end of the insulation layer 14 may extend to a lower end of the cut groove TL. Preferably, the end of the insulation layer 14 may extend to a point overlapping with the round portion A2 in the axial direction. The fact that the end of the insulation layer 14 overlaps with the round portion A2 means that when a virtual line is drawn along the end of the insulation layer 14, the virtual line passes through the area between a top position A2a and a bottom position A2b of the round portion A2.

The bending line BL of the segment T may be formed in a region between the top position A2a and the bottom position A2b of the round portion A2 while being substantially spaced apart from the end of the insulation layer 14. Of course, depending on how the force for bending the segment T is applied, the bending line BL may be formed at a higher position than the top position A2a of the round portion A2.

The end of the insulation layer 14 facing the cut groove TL along the axial direction has a structure recessed toward the coated portion 11b so as to correspond to the shape of the bottom portion A1 of the cut groove TL. This structure may be formed in a process of forming the segment T by notching the uncoated portion 11a after the insulation layer 14 is formed on the uncoated portion 11a. That is, when the uncoated portion 11a is notched, a portion of the insulation layer 14 corresponding to the bottom portion A1 of the cut groove TL may also be notched.

When the end of the insulation layer 14 extends along the axial direction to overlap with the round portion A2 of the cut groove TL, there is an effect of improving electrolyte impregnation. That is, as shown in FIG. 8, when the electrode assembly 10 in which the segments T are bent toward the core is inserted into battery housing 20 and then a liquid electrolyte EL is injected, the electrolyte EL is introduced into the electrode assembly 10 through the cut groove TL between the segments T. At this time, since the end of the insulation layer 14 overlaps with the round portion A2 of the cut groove TL, not only the distance that the electrolyte EL travels to the insulation layer 14 is short, but also the insulation layer 14 comes into direct contact with the electrolyte EL.

Preferably, the insulation layer 14 may include an inorganic filler such as Al₂O₃ or SiO₂ together with a binder. The inorganic filler is composed of particles. The particles are bound together by the binder, and pores are formed between the particles. For the formation of pores, the volume content of the binder and the inorganic filler may be adjusted. In one example, the porosity of the insulation layer 14 increases when the volume content of the inorganic filler is increased relative to the volume content of the binder. The volume content of the binder relative to the total volume of the binder and the inorganic filler may be 50% or less, preferably 40% or less, and more preferably 30% or less. The desirable volume content of the binder and the inorganic filler to give porosity to the insulation layer 14 may be easily determined through repeated experiments.

When the insulation layer 14 has porosity, the surface of the insulation layer 14 has better wettability with the electrolyte than the surface of the uncoated portion 11a made of metal. Therefore, the electrolyte impregnated into the insulation layer 14 near the bottom portion A1 and the round portion A2 of the cut groove TL quickly passes through the insulation layer 14 through the pores of the insulation layer 14 and reaches the coated portion 11b. The overlapping structure of the end of the porous insulation layer 14 and the lower portion of the cut groove TL as above may provide an advantage in terms of electrolyte impregnation.

Meanwhile, as shown in FIG. 5, when the length of the insulation layer 14 formed on the first surface (Si) of the uncoated portion 11a is longer than the length of the insulation layer 14 formed on the second surface (S₂), the end of the insulation layer 14 formed on the first surface (Si) may overlap with the round portion A2 of the cut groove TL. Meanwhile, the end of the insulation layer 14 formed on the second surface (S₂) may overlap with the round portion A2 of the cut groove TL or may be located at substantially the same position as or below the bottom portion A1 of the cut groove TL.

Referring to FIGS. 2 and 8, the first current collector plate 50 may be coupled to a coupling surface formed by bending an end portion (segment) of the uncoated portion 11a included in the first electrode 11 in a direction parallel to the first current collector plate 50. The coupling surface may have a structure in which an end portion (or segment) of the uncoated portion 11a is stacked in several layers in the axial direction. The bending direction of the uncoated portion 11a may be, for example, a direction toward the winding center C (See FIG. 2) of the electrode assembly 10. When the uncoated portion 11a has a bent shape as described above, a space occupied by the uncoated portion 11a may be reduced, thereby improving energy density. In addition, due to an increase in the coupling area between the uncoated portion 11a and the first current collector plate 50, a coupling force may be improved and also resistance may be reduced.

Referring to FIG. 2, the insulator 60 may be provided between the upper end of the electrode assembly 10 and an inner surface of the battery housing 20 or between the first current collector plate 50 and the inner surface of the battery housing 20. The insulator 60 prevents contact between the uncoated portion 11a included in the first electrode 11 and the battery housing 20 and/or between the current collector plate 50 and the battery housing 20. In other words, the insulator 60 is accommodated within the battery housing 20 and is configured to block electrical connection between the uncoated portion 11a of the first electrode 11 and the battery housing 20. Accordingly, the insulator 60 may be formed of a material having insulating property. For example, the insulator 60 may include a polymer material.

The insulation gasket 70 is arranged between the terminal 50 and the battery housing 20 to prevent contact between the battery housing 20 and the terminal 40 having opposite polarities to each other. In other words, the insulation gasket 70 blocks electrical connection between the battery housing 20 and the terminal 40. Accordingly, the upper surface 20a of the battery housing 20 having an approximately flat shape may function as a terminal of the second electrode of the battery 1.

The second current collector plate 80 may be coupled to a lower portion of the electrode assembly 10. The second current collector plate 80 may be formed of a metal material having conductivity. The second current collector plate 80 may be connected to the uncoated portion 12a included in the second electrode 12. The second current collector plate 80 may be electrically connected to the battery housing 20. At least a circumferential portion of the second current collector plate 80 may be fixed by being interposed between the inner surface (lower surface) of the beading portion 21 of the battery housing 20 and the sealing gasket 90. Preferably, the second current collector plate 80 may be welded on the inner surface of the battery housing 20, for example the inner circumference of the beading portion 21.

Although not shown in the drawings, the second current collector plate 80 may include a plurality of protrusions radially formed on one surface thereof. When the plurality of protrusions are included, the second current collector plate 80 is pressed such that the plurality of protrusions may be press-fitted onto the uncoated portion 12a included in the second electrode 12.

Referring to FIG. 2, the second current collector plate 80 may be coupled to an end of the uncoated portion 12a included in the second electrode 12. Like the uncoated portion 11a of the first electrode 11, the uncoated portion 12a of the second electrode 12 may be divided into a plurality of segments T. The coupling between the uncoated portion 12a included in the second electrode 12 and the second current collector plate 80 may be achieved by, for example, laser welding. The laser welding may be performed by partially melting a base member of the second current collector plate 80 or optionally may be performed with a solder interposed between the second current collector plate 80 and the uncoated portion 12a. In this case, it is preferable that the solder has a lower melting point than the second current collector plate 80 and the uncoated portion 12a. Resistance welding, ultrasonic welding, spot welding etc. may be used in an alternative to the laser welding, but a welding method is not limited thereto.

The second current collector plate 80 may be coupled to a coupling surface formed by bending an end portion (or segment) of the uncoated portion 12a included in the second electrode 12 in a direction parallel to the second current collector plate 80. As shown in FIG. 8, the coupling surface may have a structure in which the end portion (or segment) of the uncoated portion 12a is stacked in several layers in the axial direction. The bending direction of the uncoated portion 12a included in the second electrode 12 may be, for example, a direction toward the winding center C of the electrode assembly 10. When the uncoated portion 12a included in the second electrode 12 has a bent shape as described above, a space occupied by the uncoated portion 12a may be reduced, thereby improving energy density. In addition, due to an increase in the coupling area between the uncoated portion 12a and the second current collector plate 80, a coupling force may be improved and also resistance may be reduced.

The sealing gasket 90 may have an approximately ring shape that surrounds a circumferential portion of the sealing body 30. The sealing gasket 90 may cover a lower surface, an upper surface, and lateral surfaces of the sealing body 30 at the same time. A radial direction length of a portion of the sealing gasket 90 that covers the upper surface of the sealing body 30 may be less than or equal to a radial direction length of a portion of the sealing gasket 90 that covers the lower surface of the sealing body 30. When the radial direction length of a portion of the sealing gasket 90 that covers the upper surface of the sealing body 30 is excessively large, the sealing gasket 90 presses the second current collector plate 80 in a sizing process of vertically compressing the battery housing 20, and thus the second current collector plate 80 may be damaged or the battery housing 20 may be damaged. Accordingly, the radial direction length of a portion of the sealing gasket 90 that covers the upper surface of the sealing body 30 needs to be kept small at a certain level.

Referring to FIG. 8, the electrode assembly 10 according to an embodiment of the present disclosure may have a structure in which at least a portion of the uncoated portions 11a and 12a is bent toward a core of the electrode assembly 10. For example, referring to FIGS. 7a and 8, at least a portion of the uncoated portions 11a and 12a may be split into a plurality of segments T. The plurality of segments T may be overlapped in multiple layers in the axial direction while being bent toward the core. For example, the plurality of segments T may be notched by laser. The segments T may be formed by a well-known metal foil cutting process such as ultrasonic cutting or punching.

To prevent damage to the active material layers during bending of the uncoated portions 11a and 12a, a predetermined gap may be provided between a lower end of a cut groove TL between the segments T and the active material layer. This is because, when the uncoated portions 11a and 12a are bent, a stress is concentrated on the bending line BL provided near the lower end of the cut groove. The gap is preferably 0.2 mm to 4 mm. The gap may be 0.2 mm or more. More preferably, the gap may be 0.4 mm or more. More preferably, the gap may be 0.5 mm or more. Most preferably, the gap may be 0.7 mm or more. Also, the gap may be 4 mm or less. More preferably, the gap may be 3 mm or less. More preferably, the gap may be 1.5 mm or less. More preferably, the gap may be 1.2 mm or less. Most preferably, the gap may be 0.9 mm or less. When the gap is controlled to the numerical value range above, the active material layers near the lower end of the cut groove may be prevented from being damaged by a stress generated during bending of the uncoated portions 11a and 12a.

The lower end of the cut groove of the segment T becomes a position that can induce bending of the segment T. That is, when the segment T is bent, the bending resistance of the bottom of the segment T separated by the cut groove TL is low, and bending is induced at the corresponding portion. That is, the bent area may be the bottom of the segment T or an area adjacent thereto.

Since the insulation layer 14 exerts an effect of increasing the thickness of the thin uncoated portion 11a, when the uncoated portion 11a is bent, the strength of the portion of the uncoated portion 11a covered by the insulation layer 14 is reinforced, thereby supporting the uncoated portion 11a lower than the bending inducing portion so as not to be bent.

In addition, since the insulation layer 14 covers the boundary between the uncoated portion 11a and the coated portion 11b, when the uncoated portion 11a is bent, the insulation layer 14 may reinforce the strength of the boundary portion to reduce or prevent unintended deformation at the corresponding portion.

The bending direction of the uncoated portions 11a and 12a may be, for example, a direction toward the winding center C of the electrode assembly 10. When the uncoated portions 11a and 12a have a bent shape as described above, a space occupied by the uncoated portions 11a and 12a may be reduced, thereby improving energy density. In addition, due to an increase in the coupling area between the uncoated portions 11a and 12a and the first and second current collector plates 50 and 80, a coupling force may be further improved and also resistance may be further reduced.

Referring to FIGS. 6 and 8, the uncoated portion 11a included in the first electrode 11 may be bent in one direction. For example, in FIG. 6, a +Y direction may be a direction toward the core. When the uncoated portion 11a is bent toward the core as above, the uncoated portion 11a of the first electrode 11 may be overlapped on the uncoated portion 11a of the neighboring first electrode 11 across two separation films 13 in a radial direction. That is, when the uncoated portion 11a is located at the n^{th} winding turn of the first electrode 11, the first surface (Si) of the uncoated portion 11a may be overlapped on the second surface (S₂) of the uncoated portion 11a located at the n-1^{th} winding turn of the first electrode 11. Here, the n-1^{th} winding turn is closer to the winding center than the n^{th} winding turn. The insulation layer 14 of the first surface (Si) extends to a higher position than that of the second surface (S₂). Therefore, the portion of the insulation layer 14 of the first surface (Si) formed higher than the insulation layer 14 of the second surface (Si) lowers the possibility of contact between the first electrode 11 and the second electrode 12 adjacent thereto toward the core. That is, the insulation layer 14 formed on the first surface (Si) may prevent a short circuit between the electrodes by increasing the insulation gap IG existing between the ends of the first electrode 11 and the second electrode 12.

Meanwhile, referring to FIG. 6, on the second surface (S₂) that is an opposite side of the first surface (S1) facing the core among both surfaces of the uncoated portion 11a, the front end of the insulation layer 14 may be disposed lower, compared to the first surface (Si). Therefore, it is possible to electrically contact the uncoated portion 11a provided on the adjacent first electrode 11 or the first current collector plate 50 with the exposed uncoated portion 11a on a surface opposite to the surface facing the core. Also, the overlapping uncoated portions 11a may be coupled to the first current collector plate 50 by welding or the like so as to be electrically connected thereto. The welding may be, for example, laser welding. The laser welding may be performed by partially melting a base member of the first current collector plate 50 or may be performed with a solder for welding interposed between the first current collector plate 50 and the uncoated portion 11a. In this case, it is preferable that the solder has a lower melting point than the first current collector plate 50 and the uncoated portion 11a. Resistance welding, ultrasonic welding, spot welding etc. may be used in an alternative to the laser welding, but a welding method is not limited thereto.

As such, the insulation layer 14 covering the uncoated portion 11a of the first electrode 11 may have different covering areas on the centripetal-side surface and the centrifugal-side surface of the uncoated portion 11a. For example, an area where the insulation layer 14 covers the centripetal surface may extend to a higher position (a position closer to the front end of the uncoated portion) than an area where the insulation layer 14 covers the centrifugal-side surface.

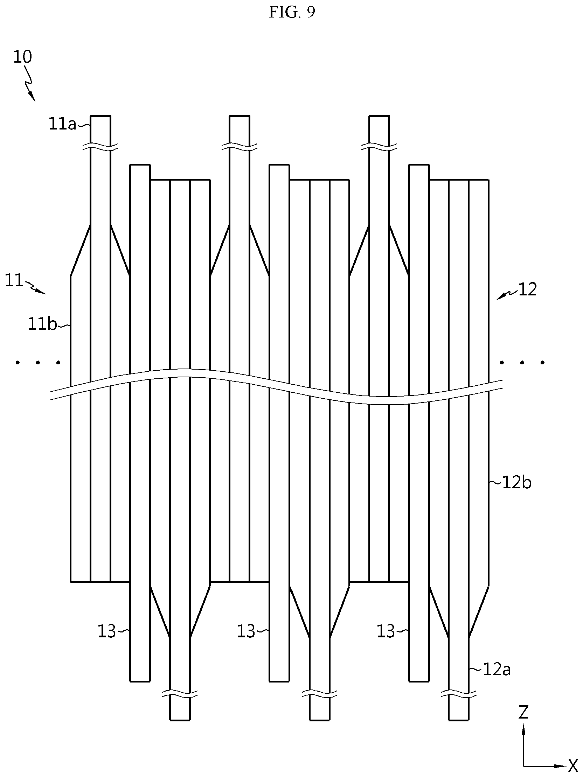

FIG. 9 is a cross-sectional view of an electrode assembly 10 including no insulation layers 14, according to a comparative example. Referring to FIG. 9, no insulation layers 14 are formed on a boundary area between an uncoated portion 11a and a coated portion 11b of a first electrode 11. According to this structure, when a movement of the first electrode 11 or a second electrode 12, such as lateral motion, occurs, the second electrode 12 is located at up to an end of a separation film 13 or the second electrode 12 protrudes farther outwards than the end of the separation film 13, and thus electrical contact between the first electrode 11 and the second electrode 12 may occur. In addition, in the structure of the comparative example, unlike the embodiments, the rigidity of the base end of the uncoated portion 11a is weak and the buckling resistance is very low, so that the base end of the uncoated portion 11a may buckle. Further, when the separation film 13 is damaged for some reasons, electrical contact between the first electrode 11 and the second electrode 12 may occur. In this case, for the electrode assembly 10 having the structure of FIG. 9, electrical contact between the first electrode 11 and the second electrode 12 causes an internal short circuit to occur. Thus, the risk of ignition increases.

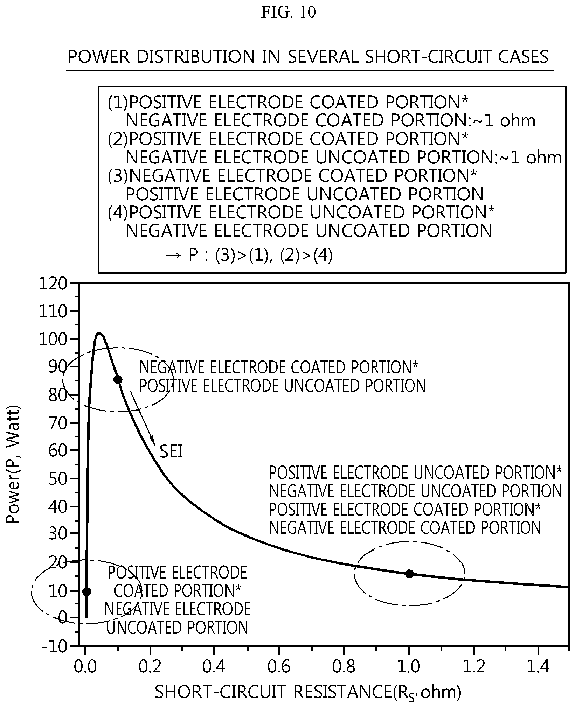

FIG. 10 is a graph for explaining a power distribution in several short-circuit cases within the battery 1. Referring to FIG. 10, the following four short-circuit cases that may occur in the battery 1 was considered.

There are a case (i) where a coated portion included in a positive electrode and a coated portion included in a negative electrode electrically contact each other, a case (ii) where the coated portion included in the positive electrode and an uncoated portion included in the negative electrode electrically contact each other, a case (iii) where the coated portion included in the negative electrode and an uncoated portion included in the positive electrode electrically contact each other, and a case (iv) where the uncoated portion included in the positive electrode and the uncoated portion included in the negative electrode electrically contact each other.

Referring to FIG. 10, it can be seen that power is highest in the case (iii) where the coated portion included in the negative electrode and the uncoated portion included in the positive electrode electrically contact each other. In other words, the possibility of ignition occurrence is very high in the case (iii) where the coated portion included in the negative electrode and the uncoated portion included in the positive electrode electrically contact each other. This is because a short-circuit current is large due to a very low resistance and accordingly a temperature rapidly increases.

Thus, considering the structure of the electrode assembly 10 according to the present disclosure, there is a demand for a structure capable of preventing electrical contact between a coated portion included in a negative electrode and an uncoated portion included in a positive electrode.

As a result of intensive study on these problems, the present inventors have found that, when the insulating layer 14 is provided on at least a partial region of an uncoated portion included in a positive electrode, electrical contact with a coated portion included in a negative electrode can be effectively prevented, thereby completing the present disclosure. In other words, the first electrode 11 may be a positive electrode. However, the first electrode 11 is not limited to a positive electrode, and may be a negative electrode. The present disclosure does not exclude a case where the insulation layer 14 is formed on the second electrode 12. In other words, the insulation layer 14 may be formed on both a positive electrode and a negative electrode. In this case, all possible short-circuit cases may be prevented.

Preferably, a battery may be, for example, a battery of which a ratio of form factors (defined by a value obtained by dividing a diameter of the battery by a height thereof, i.e. a ratio of a diameter (Φ) to a height (H)) is greater than about 0.4.

Here, the form factors refer to values indicating the diameter and the height of the battery. A battery according to an embodiment of the present disclosure may be, for example, a 46110 battery, a 4875 battery, a 48110 battery, a 4880 battery, or a 4680 battery. In a numerical value indicating a form factor, the first two numbers indicate a diameter of a battery, and the remaining numbers indicate a height of the cell.

A battery according to an embodiment of the present disclosure is a battery having an approximately cylindrical shape, and may be a battery having a diameter of about 46 mm, a height of about 110 mm, and a form factor ratio of about 0.418.

A battery according to another embodiment of the present disclosure is a battery having an approximately cylindrical shape, and may be a battery having a diameter of about 48 mm, a height of about 75 mm, and a form factor ratio of about 0.640.

A battery according to another embodiment of the present disclosure is a battery having an approximately cylindrical shape, and may be a battery having a diameter of about 48 mm, a height of about 110 mm, and a form factor ratio of about 0.436.

A battery according to another embodiment of the present disclosure is a battery having an approximately cylindrical shape, and may be a battery having a diameter of about 48 mm, a height of about 80 mm, and a form factor ratio of about 0.600.

A battery according to another embodiment of the present disclosure is a battery having an approximately cylindrical shape, and may be a battery having a diameter of about 46 mm, a height of about 80 mm, and a form factor ratio of about 0.575.

According to the related art, batteries having a form factor ratio of about 0.4 or less are used. In other words, according to the related art, for example, a 1865 battery, a 2170 battery, etc. are used. The 1865 battery has a diameter of about 18 mm, a height of about 65 mm, and a form factor ratio of about 0.277. The 2170 battery has a diameter of about 21 mm, a height of about 70 mm, and a form factor ratio of about 0.300.

The batteries according to the above-described embodiments may be used to manufacture a battery pack.

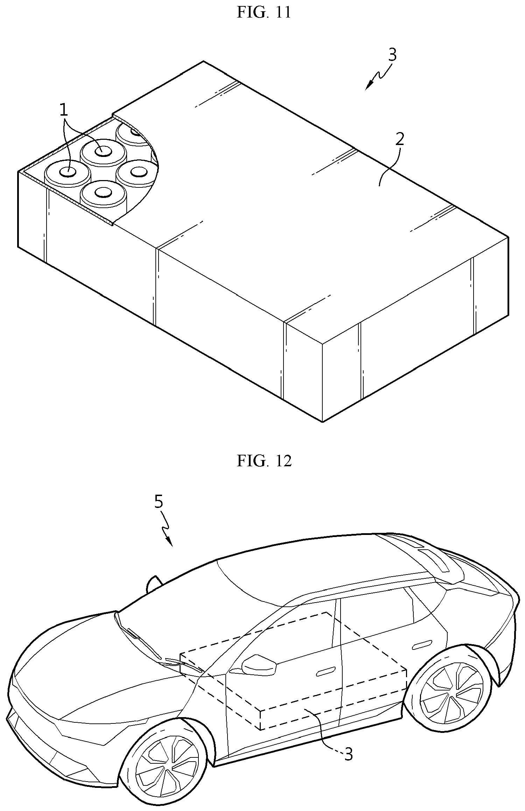

FIG. 11 is a perspective view illustrating a structure of a battery pack according to an embodiment of the present disclosure.

Referring to FIG. 11, a battery pack 3 according to an embodiment of the present disclosure includes an assembly in which batteries 1 are electrically connected to each other, and a pack housing 2 accommodating the assembly. The batteries 1 are the batteries according to the above-described embodiments. In the drawings, for convenience of illustration, components such as a bus bar for electrical connection between the batteries 1, a cooling unit, and an external terminal are omitted.

The battery pack 3 may be mounted on a vehicle. Examples of the vehicle may include an electric vehicle, a hybrid vehicle, or a plug-in hybrid vehicle. The vehicle includes a four-wheeled vehicle or a two-wheeled vehicle.

FIG. 12 is a perspective view for explaining a vehicle including the battery pack 3 of FIG. 11.

Referring to FIG. 12, a vehicle 5 according to an embodiment of the present disclosure includes the battery pack 3 according to an embodiment of the present disclosure. The vehicle 5 operates by receiving power from the battery pack 3 according to an embodiment of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. An electrode assembly comprising:
a first electrode;
a second electrode having a sheet shape; and
a separation film between the first electrode and the second electrode, the first electrode and the second electrode, and the separator film being wound about an axis in a winding direction to define a core and an outer circumference of the electrode assembly,
wherein each of the first electrode and the second electrode includes:
an uncoated portion not coated with an active material layer and formed on a longer edge end, the uncoated portion protruding beyond the separation film along an axial direction; and
a coated portion having an active material layer coated on a region excluding the uncoated portion,
wherein the first electrode includes at least one insulation layer that covers at least a portion of the uncoated portion and at least a portion of the coated portion along the winding direction,
wherein the uncoated portion is bent in a radial direction at a point spaced apart from the insulation layer in the axial direction, and
wherein the insulation layer is thinner than the active material layer.

2. The electrode assembly according to claim 1, wherein a predetermined gap exists between a bent area of the uncoated portion and the insulation layer in the axial direction.

3. The electrode assembly according to claim 1, wherein the insulation layer is provided on opposite surfaces of the uncoated portion of the first electrode.

4. The electrode assembly according to claim 1, wherein the uncoated portion has a first surface facing the core and a second surface facing the outer circumference, and the uncoated portion is bent such that the first surface faces an end surface of the electrode assembly.

5. The electrode assembly according to claim 4, wherein an area where the insulation layer covers the first surface extends farther toward a free end of the uncoated portion than an area where the insulation layer covers the second surface.

6. The electrode assembly according to claim 4, wherein the uncoated portion is bent and overlapped into several layers in the axial direction, and
wherein the insulation layer is not located on a portion of a surface where uncoated portions adjacent in the axial direction are in contact with each other.

7. The electrode assembly according to claim 1, wherein one end of the insulation layer extends outward in the axial direction farther than one end of the separation film.

8. The electrode assembly according to claim 1, wherein at least a partial area of the uncoated portion is divided into a plurality of segments by a plurality of cut grooves spaced apart in the winding direction, and the plurality of segments are bent in the radial direction.

9. The electrode assembly according to claim 8, wherein a predetermined gap exists between a lower end of each of the cut grooves and the insulation layer.

10. The electrode assembly according to claim 8, wherein the cut groove includes a flat bottom portion, side portions of adjacent segments located on opposites sides of the bottom portion, and a round portion configured to connect the bottom portion and each of the side portions, and
wherein an imaginary line along an axial end of the insulation layer overlaps with the round portion.

11. The electrode assembly according to claim 10, wherein the uncoated portion of the first electrode has a first surface facing the core and a second surface facing the outer circumference,
wherein an area where the insulation layer covers the first surface extends farther toward a free end of the uncoated portion of the first electrode than an area where the insulation layer covers the second surface, and
wherein the imaginary line along the axial end of the insulation layer on the second surface of the uncoated portion of the first electrode overlaps with the round portion.

12. The electrode assembly according to claim 1, wherein at least a portion of the uncoated portion is used as an electrode tab by itself.

13. The electrode assembly according to claim 1, wherein one end of the insulation layer in the axial direction is located at substantially a same height as one end of the separation film in the axial direction.

14. The electrode assembly according to claim 1, wherein the coated portion does not protrude beyond the separation film in the axial direction.

15. The electrode assembly according to claim 1, wherein the first electrode is a positive electrode.

16. The electrode assembly according to claim 1, wherein one end of the second electrode that faces the insulation layer with the separation film interposed between the second electrode and the insulation layer does not protrude beyond one end of the separation film.

17. The electrode assembly according to claim 1, wherein the coated portion includes a sliding portion at one end in the axial direction, and the active material layer of the sliding portion has a reduced thickness compared with a center region of the coated portion.

18. The electrode assembly according to claim 17, wherein the sliding portion is located at a boundary area of the coated portion and the uncoated portion.

19. The electrode assembly according to claim 17, wherein the sliding portion is included in one end of the first electrode and the other end of the second electrode, respectively.

20. The electrode assembly according to claim 17, wherein the sliding portion of the coated portion of the first electrode and the sliding portion of the coated portion of the second electrode are in opposite directions to each other based on the axial direction.

21. The electrode assembly according to claim 19, wherein the separation film protrudes beyond the other end of the first electrode and one end of the second electrode.

22. The electrode assembly according to claim 17, wherein the insulation layer covers at least a portion of the sliding portion.

23. The electrode assembly according to claim 1, wherein the insulation layer covers the uncoated portion by 0.3 mm to 5 mm.

24. The electrode assembly according to claim 1, wherein the insulation layer covers the uncoated portion by 1.5 mm to 3 mm.

25. The electrode assembly according to claim 1, wherein the insulation layer covers the coated portion by 0.1 mm to 3 mm.

26. The electrode assembly according to claim 1, wherein the insulation layer covers the coated portion by 0.2 mm to 0.5 mm.

27. The electrode assembly according to claim 1, wherein the uncoated portion of the first electrode and the uncoated portion of the second electrode protrude in opposite directions to each other.

28. The electrode assembly according to claim 1, wherein a length in the axial direction of the coated portion of the first electrode is shorter than a length in the axial direction of the coated portion of the second electrode.

29. The electrode assembly according to claim 1, wherein the coated portion of the first electrode is located more inward in the axial direction than the coated portion of the second electrode.

30. The electrode assembly according to claim 1, wherein the insulation layer is an insulation coating layer or an insulation tape on a boundary area between the uncoated portion and the coated portion.

31. The electrode assembly according to claim 1 or 10, wherein the insulation layer includes a binder and an inorganic filler.

32. The electrode assembly according to claim 31, wherein the insulation layer is porous.

33. The electrode assembly according to claim 2 or 9, wherein the gap is 0.2 mm to 4 mm.

34. The electrode assembly according to claim 2 or 9, wherein the gap is 0.4 mm to 1.5 mm.

35. A battery, comprising:
an electrode assembly comprising a first electrode, a second electrode having a sheet shape, and a separation film interposed between the first electrode and the second electrode, the first electrode, the second electrode and the separator film being wound around an axis in a winding direction to define a core and an outer circumference, wherein each of the first electrode and the second electrode includes an uncoated portion not coated with an active material layer and formed on a longer edge end, the uncoated portion protruding beyond the separation film along an axial direction; and a coated portion having an active material layer coated on a region excluding the uncoated portion, the first electrode includes at least one insulation layer that covers at least a portion of the uncoated portion and at least a portion of the coated portion along the winding direction, the uncoated portion is bent in a radial direction at a point spaced apart from the insulation layer in the axial direction, and the insulation layer is thinner than the active material layer;
a battery housing configured to accommodate the electrode assembly, the battery housing having an open end, the electrode assembly electrically connected to one of the first electrode and the second electrode;
a sealing body configured to seal the open end of the battery housing; and
a terminal electrically connected to another of the first electrode and the second electrode, the terminal having a surface exposed to an outside of the battery housing.

36. The battery according to claim 35, further comprising a first current collector plate electrically coupled to the uncoated portion of the first electrode.

37. The battery according to claim 36, wherein a region of the uncoated portion of the first electrode not covered by the insulation layer is electrically coupled to the first current collector plate.

38. The battery according to claim 37, wherein the uncoated portion of the first electrode is coupled to the first current collector plate by welding in the region of the uncoated portion not covered by the insulation layer.

39. A battery pack, comprising the battery according to claim 35.

40. A vehicle, comprising the battery pack according to claim 39.
